# FASCICULE DE BREVET EUROPEEN

(11) **EP 2 382 370 B1**
(45) Date de publication et mention de la délivrance du brevet: **17.07.2013**
(21) Numéro de dépôt: 09805798.7
(22) Date de dépôt: 29.12.2009
(51) Int. Cl.: E21B 43/01, B63B 22/02

(54) **PROCEDE DE DECONNEXION D'UN ENSEMBLE DE TRANSFERT DE FLUIDE ENTRE LE FOND D'UNE ETENDUE D'EAU ET LA SURFACE, ET ENSEMBLE DE TRANSFERT ASSOCIE**
VERFAHREN ZUR TRENNUNG EINER VORRICHTUNG ZUR ÜBERTRAGUNG VON FLUID ZWISCHEN DEM GRUND EINES GEWÄSSERS UND DER OBERFLÄCHE SOWIE ZUGEHÖRIGE TRANSFERVORRICHTUNG
METHOD FOR DISCONNECTING A DEVICE FOR TRANSFERRING FLUID BETWEEN THE BOTTOM OF AN EXPANSE OF WATER AND THE SURFACE AND ASSOCIATED TRANSFER DEVICE

(30) Priorité: 29.12.2008 FR 0859092; 25.03.2009 FR 0951933
(43) Date de publication de la demande: 02.11.2011
(73) Titulaire: Technip France, 92400 Courbevoie (FR)
(72) Inventeur: ESPINASSE, Philippe, F-76420 Bihorel (FR)
(74) Mandataire: Domenego, Bertrand
(86) Numéro de dépôt international: PCT/FR2009/052712
(87) Numéro de publication internationale: WO 2010/076535

(56) Documents cités:
- EP-A- 0 186 969
- WO-A-02/092423
- FR-A- 2 578 024
- US-A- 4 915 416

## Description

La présente invention concerne un procédé de déconnexion d'un ensemble de transfert de fluide entre le fond d'une étendue d'eau et la surface, l'ensemble de transfert comprenant :
- au moins une conduite de transport de fluide comportant un tronçon inférieur, un tronçon intermédiaire, un tronçon supérieur, et un organe de déconnexion rapide interposé entre le tronçon intermédiaire et l'un du tronçon inférieur et du tronçon supérieur ;
- une tourelle portant le tronçon inférieur, la tourelle comprenant des moyens d'ancrage dans le fond de l'étendue d'eau ;
- une barge flottante montée rotative sur la tourelle autour d'un axe de rotation, la barge portant le tronçon supérieur,
le tronçon intermédiaire comprenant au moins une section de flexible enroulé autour de l'axe de rotation,
le procédé comprenant une étape de raccordement dans laquelle le tronçon intermédiaire est raccordé à l'un du tronçon inférieur et du tronçon supérieur par l'intermédiaire de l'organe de déconnexion rapide, et une étape de déconnexion comprenant la déconnexion de l'organe de déconnexion rapide.

Un tel ensemble de transfert de fluide est destiné à convoyer notamment des hydrocarbures liquides ou gazeux recueillis dans le fond d'une étendue d'eau pour les amener jusqu'à la surface en vue de leur stockage et/ou de leur déchargement.

Pour effectuer un tel transfert, il est connu d'utiliser un ensemble comprenant une pluralité de conduites montantes, désignées par le terme anglais « riser » qui s'étendent entre des têtes de puits situées sur le fond de l'étendue d'eau et une installation de surface. Ces conduites montantes sont rigides ou flexibles.

L'installation de surface est par exemple une barge de production, liquéfaction, stockage et déchargement d'hydrocarbures, désignée par le terme anglais « Floating Production Storage and Off-loading Unit » ou « FPSO ».

Un tel ensemble de transfert est parfois monté dans des zones où les conditions climatiques peuvent se dégrader sérieusement, et où les mouvements de l'étendue d'eau au voisinage de la barge peuvent être forts, en raison notamment des vents et des courants. Aussi, l'installation de surface comprend de manière connue une tourelle fixe par rapport au fond de l'étendue d'eau. La tourelle fixe est reçue rotative dans un puits ménagé à une extrémité ou au centre de la barge. La barge est alors libre de pivoter autour de la tourelle pour s'orienter favorablement par rapport aux mouvements locaux de l'étendue d'eau et aux forces appliquées sur elle.

La conduite de transport de fluide comprend alors un tronçon inférieur qui raccorde le fond de l'étendue d'eau à la tourelle, un tronçon intermédiaire qui s'étend entre la tourelle et la barge, et un tronçon supérieur qui s'étend sur la barge. Le tronçon inférieur traverse alors l'intérieur de la tourelle.

Compte tenu de la liaison rotative entre la barge et la tourelle, le tronçon intermédiaire comprend par exemple un joint tournant, ou plus avantageusement une section de conduite flexible enroulée en boucle autour de l'axe de rotation de la barge par rapport à la tourelle.

Cette section de flexible s'enroule et se déroule autour de l'axe de rotation pour accommoder les différences de position angulaire entre la tourelle fixe et la barge rotative.

Toutefois, en cas de conditions climatiques vraiment défavorables, l'ensemble de transfert doit être mis en sécurité en libérant totalement en rotation la barge par rapport à la tourelle. Ceci implique de déconnecter la conduite flexible pour éviter que le tronçon intermédiaire ne s'abime.

A cet effet, on connaît de US 4,915,416 un procédé de déconnexion du type précité, dans lequel le tronçon inférieur de la conduite de transfert est déconnecté d'un tambour rotatif par rapport à la barge et est descendu à l'aide d'un treuil avant d'être abandonné.

Toutefois, dans un tel procédé, la récupération du tronçon inférieur de la conduite flexible après son largage est rendue très difficile.

Un but de l'invention est donc d'obtenir un procédé de déconnexion d'un ensemble de transfert qui comprend un tronçon intermédiaire avec une section de flexible enroulé, la déconnexion pouvant être mise en application rapidement et de manière sûre, tout en offrant une reconnexion rapide de la conduite de transfert après la déconnexion.

A cet effet, l'invention a pour objet un procédé du type précité, caractérisé en ce que l'ensemble de transfert comprend au moins une structure intermédiaire de support au moins partiel de la section de flexible enroulé, la structure intermédiaire étant montée entre la tourelle et la barge, entre une configuration entraînée en rotation conjointe avec la barge autour de l'axe de rotation par rapport à la tourelle et une configuration retenue en rotation autour de l'axe de rotation par la tourelle,
et, lors de l'étape de raccordement, la structure intermédiaire est placée dans l'une de la configuration entraînée et de la configuration retenue, l'étape de déconnexion comprenant le passage de la structure intermédiaire vers l'autre de la configuration entraînée et de la configuration retenue.

Le procédé selon l'invention peut comprendre l'une ou plusieurs des caractéristiques suivantes, prise(s) isolément ou suivant toute(s) combinaison(s) techniquement possibles :
- la structure intermédiaire comprend une paroi de support de la section de flexible enroulé s'étendant autour de l'axe de rotation, l'étape de raccordement comprenant l'enroulement et/ou le déroulement de la section de flexible enroulé sur la paroi de support autour de l'axe de rotation lors de la rotation de la barge par rapport à la tourelle ;
- l'étape de déconnexion comprend le déplacement de la structure intermédiaire en translation le long de l'axe de rotation pour faire passer la structure intermédiaire de l'une de sa configuration entraînée et de sa configuration retenue vers l'autre de sa configuration entraînée et de sa configuration retenue ;
- lors de l'étape de raccordement, la structure intermédiaire occupe sa configuration retenue ;
- lors de l'étape de raccordement, la structure intermédiaire occupe sa configuration entraînée ;
- après l'étape de déconnexion, la barge est montée librement rotative autour de la tourelle, les extrémités de la section de flexible enroulé restant sensiblement fixes angulairement l'une par rapport à l'autre autour de l'axe de rotation.

L'invention a également pour objet un ensemble de transfert de fluide entre le fond d'une étendue d'eau et la surface du type comprenant :
- au moins une conduite de transport de fluide comportant un tronçon inférieur, un tronçon intermédiaire, un tronçon supérieur, et un organe de déconnexion rapide interposé entre le tronçon intermédiaire et l'un du tronçon inférieur et du tronçon supérieur,
- une tourelle portant le tronçon inférieur, la tourelle comprenant des moyens d'ancrage dans le fond de l'étendue d'eau ;
- une barge flottante montée rotative sur la tourelle autour d'un axe de rotation, la barge portant le tronçon supérieur,
le tronçon intermédiaire comprenant au moins une section de flexible enroulé autour de l'axe de rotation,
la conduite de transport étant propre à occuper une configuration raccordée dans laquelle le tronçon intermédiaire est raccordé à l'un du tronçon inférieur et du tronçon supérieur par l'intermédiaire de l'organe de déconnexion rapide, et une configuration de déconnexion de l'organe de déconnexion rapide,
caractérisé en ce que l'ensemble de transfert comprend une structure intermédiaire de support au moins partiel de la section de flexible enroulé, la structure intermédiaire étant montée entre la tourelle et la barge, entre une configuration entraînée en rotation conjointe avec la barge autour de l'axe de rotation par rapport à la tourelle et une configuration retenue en rotation autour de l'axe de rotation par la tourelle.

L'ensemble de transfert selon l'invention peut comprendre l'une ou plusieurs des caractéristiques suivantes, prise(s) isolément ou suivant toute(s) combinaison(s) techniquement possible(s) :
- la structure intermédiaire comprend une paroi de support de la section de flexible enroulé s'étendant autour de l'axe de rotation, la section de flexible enroulé étant disposée au moins partiellement sur la paroi de support ;
- l'ensemble comprend une pluralité de conduites de transport de fluide, la structure intermédiaire comprenant une paroi de support pour la section de flexible enroulé de chaque conduite de transport, les parois de support étant disposés les unes au-dessus des autres le long de l'axe de rotation ;
- dans la configuration raccordée de la conduite, la structure intermédiaire occupe sa configuration entraînée ;
- dans la configuration raccordée de la conduite, la structure intermédiaire occupe sa configuration retenue ;
- l'ensemble comprend un dispositif de réglage de la position angulaire de la structure intermédiaire par rapport à la tourelle dans la configuration retenue ;
- dans une première de la configuration entraînée et de la configuration retenue, les extrémités de la section de flexible enroulé sont mobiles angulairement l'une par rapport à l'autre autour de l'axe de rotation lors de la rotation de la barge autour de la tourelle, et dans une deuxième de la configuration entraînée et de la configuration retenue, les extrémités de la section de flexible enroulé restent sensiblement fixes angulairement l'une par rapport à l'autre autour de l'axe de rotation lors de la rotation de la barge autour de la tourelle ; et
- l'ensemble comprend une structure intermédiaire de support au moins partiel d'une section de flexible enroulé d'une conduite de transport additionnelle, la structure intermédiaire additionnelle étant montée entre la tourelle et la barge, entre une configuration entraînée en rotation conjointe avec la barge autour de l'axe de rotation et une configuration retenue en rotation autour de l'axe de rotation par la tourelle, la structure intermédiaire étant disposée à l'extérieur de la tourelle, la structure intermédiaire additionnelle étant disposée dans la tourelle ;
- la structure intermédiaire est disposée sensiblement au dessus de la tourelle et de la barge ;
- la structure intermédiaire est disposée sensiblement entre la tourelle et la barge, à l'extérieur de la tourelle ;
- la structure intermédiaire est disposée sensiblement dans la tourelle ;
- la structure intermédiaire est mobile en translation le long de l'axe de rotation entre sa configuration entraînée et sa configuration retenue.

L'invention sera mieux comprise à la lecture de la description qui va suivre, donnée uniquement à titre d'exemple, et faite en se référant aux dessins annexés, sur lesquels :
- la Figure 1 est une vue schématique en coupe suivant un plan vertical médian d'un premier ensemble de transfert selon l'invention dans une configuration de raccordement de la conduite de transport de fluide ;
- la Figure 2 est une vue à plus grande échelle d'un détail de l'ensemble de transfert représenté sur la Figure 1, illustrant la liaison entre la tourelle et la barge flottante ;
- la Figure 3 est une vue de dessus de la Figure 2 ;
- la Figure 4 est une vue analogue à la Figure 2, dans une configuration de déconnexion de la conduite de transport ;
- la Figure 5 est une vue analogue à la Figure 1 d'un deuxième ensemble de transfert selon l'invention ;
- la Figure 6 est une vue d'un détail marqué VI sur la Figure 5 ;
- la Figure 7 est une vue d'un détail marqué VII sur la Figure 5, dans la configuration de raccordement ;
- la Figure 8 est une vue analogue à la Figure 7 dans la configuration de déconnexion ; et
- la Figure 9 est une vue analogue à la Figure 5 d'un troisième ensemble de transfert selon l'invention.
- la Figure 10 est une vue schématique du deuxième ensemble de transfert selon l'invention montrant un détail de la tourelle selon un troisième mode de réalisation
- la Figure 11 est une vue de détail de la partie inférieure de la tourelle selon la figure 10 ; et
- la Figure 12 est une vue prise en coupe suivant un plan transversal de la partie inférieure de la tourelle représentée sur la Figure 11.

Dans tout ce qui suit, les termes « amont » et « aval » s'entendent par rapport au sens normal de circulation d'un fluide dans une conduite.

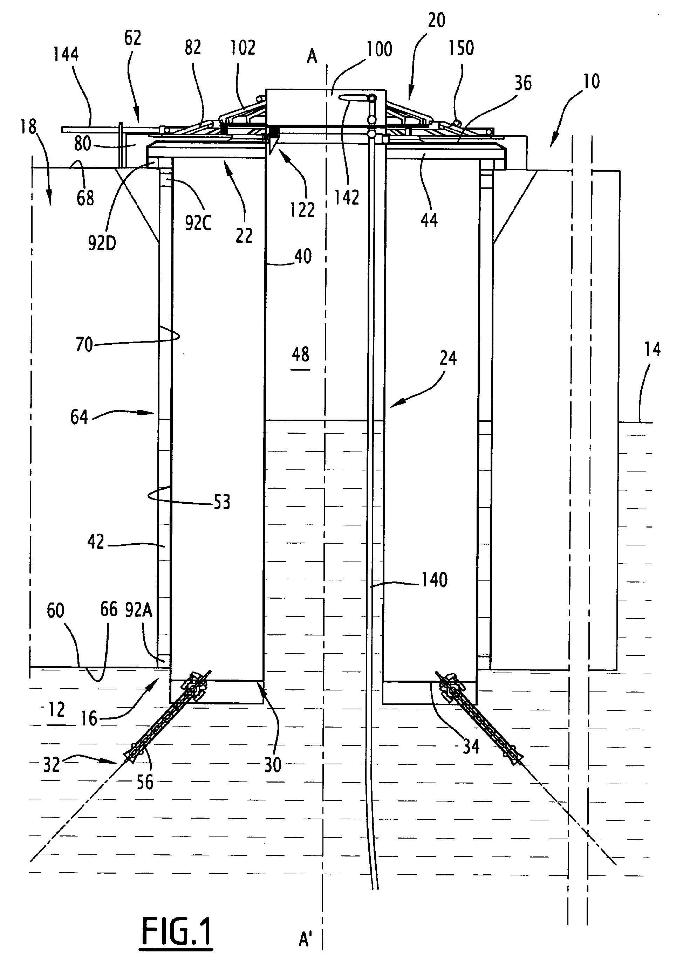

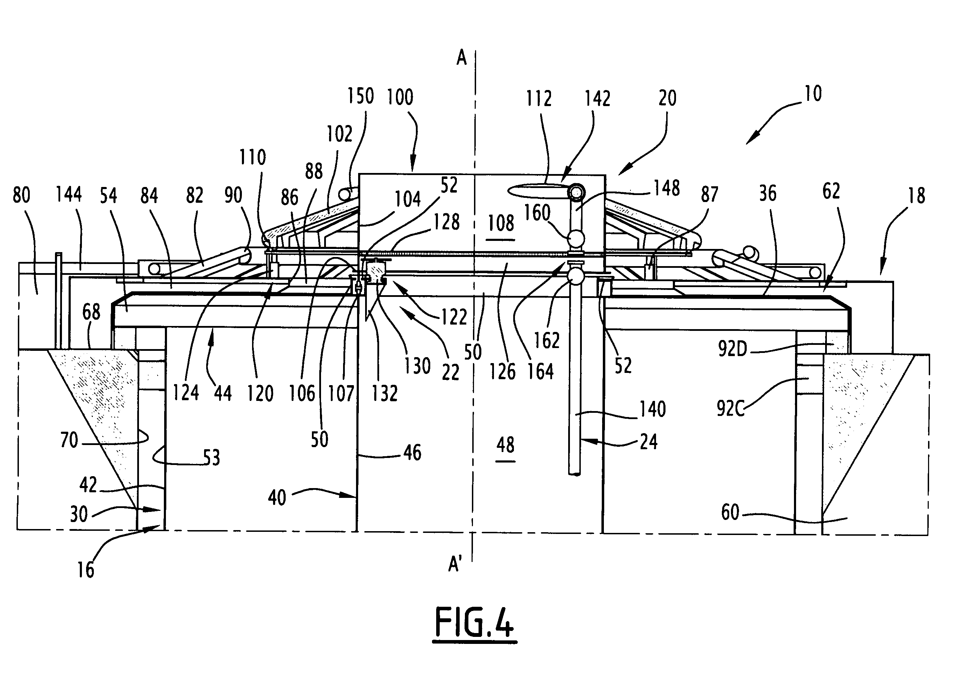

Un premier ensemble de transfert 10 de fluide selon l'invention est illustré par les Figures 1 à 4.

Cet ensemble 10 est destiné par exemple à convoyer un fluide formé par des hydrocarbures liquides ou gazeux prélevés dans le fond d'une étendue d'eau et collectés dans un ensemble de fond (non représenté).

Le fluide convoyé par l'installation est amené à travers l'étendue d'eau 12 jusqu'à la surface 14 visible sur la Figure 1.

L'étendue d'eau 12 est par exemple un lac, une mer ou un océan. Elle repose sur un fond et présente une profondeur, prise entre la surface 14 et le fond comprise par exemple entre 100 m et 3500 m.

Comme illustré par la Figure 1, l'ensemble de transfert 10 comprend une tourelle 16 ancrée dans le fond de l'étendue d'eau 12, une barge 18 montée rotative autour de la tourelle 16 autour d'un axe de rotation A-A' vertical, et une structure intermédiaire 20 montée entre la barge 18 et la tourelle 16 pour être sélectivement entraînée en rotation par la barge 18 ou retenue par la tourelle 16.

L'ensemble 10 comprend en outre des moyens 22 de déplacement en rotation et en translation de la structure intermédiaire 20 par rapport à la tourelle 16 et à la barge 18, et une pluralité de conduites 24 de transport de fluide pour raccorder l'ensemble de fond à la barge 18 à travers la tourelle 16 et la structure intermédiaire 20. Pour simplifier le dessin, une seule conduite 24 est représentée sur la Figure 1.

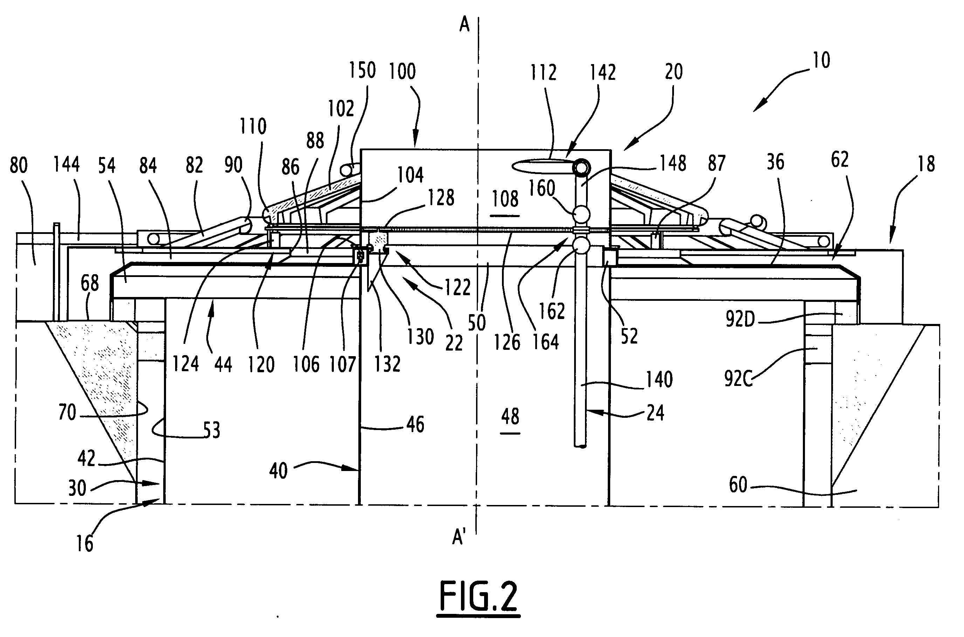

En référence aux Figures 1 et 2, la tourelle 16 comprend un corps 30 cylindrique et des moyens 32 d'ancrage du corps 30 dans le fond de l'étendue d'eau.

Le corps 30 est d'axe vertical A-A'. Il s'étend entre une surface inférieure 34 située en regard et à l'écart du fond de l'étendue d'eau 12 et une surface supérieure 36 située au-dessus la surface 14 de l'étendue d'eau 12.

Le corps 30 comprend un manchon central intérieur 40, un manchon annulaire extérieur 42 disposé autour du manchon intérieur 40 et une collerette 44 de guidage en rotation de la barge 18 autour du corps 30, qui obture vers le haut le manchon annulaire extérieur 42.

Le manchon 40 comprend une paroi périphérique 46 qui délimite intérieurement un passage 48 dans lequel passe la conduite 24.

La paroi périphérique 46 comprend, le long de son bord supérieur, un rail de guidage 50 et d'appui de la structure intermédiaire 20.

Le rail 50 est formé par un profilé annulaire débouchant vers le haut à travers une paroi d'appui fendue 52. Le rail 50 s'étend sur toute la périphérie autour de l'axe A-A'.

Le passage de circulation 48 débouche axialement vers le haut en regard de la structure intermédiaire 20 et axialement vers le bas dans l'étendue d'eau 12.

La collerette 44 obture vers le haut le manchon annulaire extérieur 42. Elle s'étend intérieurement au voisinage de l'axe de rotation A-A', en dessous du rail de guidage 50. La collerette 44 définit un bord extérieur 54 qui fait saillie radialement à l'écart de l'axe de rotation A-A' au-delà du manchon annulaire extérieur 42 et reprend les efforts principaux.

Le manchon annulaire extérieur 42 présente une surface périphérique extérieure 53 sensiblement cylindrique pour le guidage en rotation de la barge 18 autour de la tourelle 16.

Les moyens d'ancrage 32 sont distincts de la ou de chaque conduite de transport 24.

Ils comprennent des lignes flexibles 56 présentant une extrémité supérieure fixée sur la tourelle 16, et une extrémité inférieure fixée dans le fond de l'étendue d'eau par un élément d'ancrage, comme par exemple une pile ou une ancre à succion.

Les lignes flexibles 56 maintiennent la tourelle 16 sensiblement immobile horizontalement par rapport au fond de l'étendue d'eau, tout en offrant une certaine flexibilité verticale. En outre, les lignes 56 maintiennent la tourelle 16 sensiblement fixe en rotation autour de l'axe A-A'.

La barge 18 comprend une coque flottante 60, un support 62 de réception temporaire en mode déconnecté de la structure intermédiaire 20, et des moyens 64 de guidage en rotation de la barge 18 autour de l'axe de rotation A-A'.

La coque 60 présente une hauteur, prise entre sa surface inférieure 66 et sa surface supérieure 68, sensiblement égale à la hauteur de la tourelle 16. La coque 60 définit un puits 70 d'axe A-A' pour la réception de la tourelle 16.

Dans l'exemple représenté sur les Figures, le puits 70 est situé sensiblement au centre de la barge 18. En variante, il est situé à une extrémité de la barge 18. Il débouche axialement vers le haut et vers le bas.

Le puits 70 présente une section transversale sensiblement cylindrique de diamètre légèrement supérieur au diamètre extérieur du manchon annulaire extérieur 42, tel que défini par la surface extérieure 53, afin de permettre l'interposition des moyens 64 de guidage en rotation. Le puits 70 reçoit la tourelle 16.

Le support de réception 62 comprend une coiffe annulaire 80 et une paroi tronconique extérieure 82 de support au moins partiel de la conduite de transport 24.

La coiffe 80 est rapportée sur la surface supérieure 68 autour du puits 70. Elle présente une paroi annulaire horizontale 84 qui fait saillie intérieurement vers l'axe A-A' en regard du puits 70, au-dessus de la collerette 44.

La paroi supérieure 84 porte, au voisinage d'un bord annulaire intérieur 86, une bague 87 annulaire de support pour des moyens de levage de la structure intermédiaire 20, comme on le verra plus bas.

La paroi supérieure 84 délimite, à l'intérieur du bord annulaire intérieur 86, une ouverture 88 de passage de la structure intermédiaire 20, s'étendant à l'intérieur du rail 52.

La paroi tronconique extérieure 82 fait saillie vers le haut à partir de la paroi supérieure 84. Elle forme, dans un plan axial passant par l'axe A-A', un angle supérieur à 10° avec l'horizontale. Elle s'étend sur toute la périphérie de la paroi supérieure 84 autour de l'axe A-A'.

Les moyens de guidage en rotation 64 comprennent des paliers 92A, 92C solidaires de la coque 60. Les paliers 92A, 92C sont interposés dans l'espace annulaire défini entre le manchon annulaire 42 et la coque 18 dans le puits 70, au voisinage respectivement du bord inférieur 66, du bord supérieur 68

En outre, les moyens de guidage en rotation 64 comprennent un palier 92D d'appui interposé entre la surface supérieure 68 et le bord extérieur 54 de la collerette 44, en dessous de la coiffe 80.

Ainsi, la barge flottante 18 est montée rotative autour de la tourelle 16, autour de l'axe de rotation A-A'.

La barge flottante 18 est ainsi libre de s'orienter angulairement autour de l'axe de rotation A-A' en fonction du courant et des vents s'appliquant sur elle, afin adopter la position angulaire la plus stable. En variante, elle peut être pilotée pour s'orienter angulairement suivant un angle donné autour de l'axe A-A'.

Dans l'exemple représenté sur les Figures 1 à 4, la structure intermédiaire 20 est disposée au-dessus de la tourelle 16 et de la barge flottante 18, à l'extérieur du puits 70.

La structure intermédiaire 20 couvre le puits 70 vers le haut. Elle comprend un tambour rotatif central 100 d'axe A-A' et une paroi tronconique intérieure 102 de support qui fait saillie radialement vers le bas à partir du tambour rotatif 100.

Le tambour 100 présente un diamètre défini par le rayon de courbure autorisé pour le flexible intermédiaire de transfert. Il comprend une paroi cylindrique 104 présentant un pied d'appui annulaire 106 destiné à venir en appui sur la paroi horizontale d'appui 52 dans l'ouverture 88.

La paroi cylindrique 104 fait saillie vers le haut au-dessus de la surface supérieure 36 et au-dessus de la coiffe 84. Elle délimite un passage intérieur 108 qui débouche vers le bas dans le passage intérieur 48 du manchon 40.

Le pied annulaire 106 porte au moins une roulette 107 de roulage dans le rail 50, déployable vers le bas à travers la paroi de support fendue 52 entre une position rétractée, placée à l'écart du fond du rail 50, et une position déployée de roulage au contact du fond du rail 50.

La paroi tronconique intérieure 102 s'étend radialement à l'écart de l'axe A-A', dans le prolongement intérieur de la paroi tronconique extérieure 82, jusqu'à un bord annulaire libre 110 qui s'étend en regard du bord annulaire 90 extérieur de la paroi tronconique extérieure 82. Elle s'étend sur toute la périphérie de la paroi cylindrique 104 autour de l'axe A-A'.

Le bord annulaire extérieur 110 s'étend en outre au dessus et en regard de la bague d'appui 87.

Dans un plan axial passant par l'axe A-A', l'angle défini par la paroi tronconique intérieure 102 et un plan horizontal est sensiblement égal à l'angle défini par la paroi tronconique extérieure 82 et un plan horizontal.

La paroi cylindrique 104 délimite en outre une ouverture radiale 112 de passage de la conduite, qui débouche vers l'extérieur au-dessus de la paroi tronconique 102.

Comme on le verra en détail plus bas, la structure intermédiaire 20 est mobile en translation le long de l'axe A-A' entre une configuration inférieure retenue par la tourelle 16, dans laquelle elle est solidaire en rotation avec la tourelle 16, et dans laquelle la barge 18 est mobile en rotation autour de l'ensemble formé par la tourelle 16 et la structure intermédiaire 20, et une configuration supérieure entraînée par la barge 18, dans laquelle la structure intermédiaire 20 est entraînée en rotation conjointement avec la barge 18 autour de l'axe de rotation A-A' par rapport à la tourelle 16.

En outre, dans la configuration retenue, la position angulaire relative de la structure intermédiaire 20 par rapport à la tourelle 16 est réglable par l'intermédiaire des moyens de déplacement 22, comme on va le voir plus bas.

Les moyens de déplacement 22 comprennent un dispositif 120 de déplacement en translation le long de l'axe A-A' de la structure intermédiaire 20 par rapport à la tourelle 16 et par rapport à la barge 18 et un dispositif 122 de réglage de la position angulaire de la structure intermédiaire 20 par rapport à la tourelle 16, lorsque la structure intermédiaire 20 occupe sa configuration retenue.

Le dispositif 120 de déplacement en translation comprend une pluralité de vérins 124 montés sur la coiffe 80 au voisinage du bord extérieur 86, sous la paroi tronconique intérieure 102.

Les vérins 124 sont propres à soulever la paroi tronconique 102 intérieure et par suite, la structure intermédiaire 20, pour déplacer la structure 20 entre la configuration retenue et la configuration entraînée.

Le dispositif de déplacement en rotation 122 comprend une couronne dentée intérieure 126, solidaire de la paroi cylindrique 104 dans le passage 108, un pignon rotatif 128 propre à être engrené sur la couronne 126 dans la configuration retenue, et un moteur d'entraînement 130 du pignon rotatif 128 monté sur un support 132 solidaire du manchon intérieur 40 dans le passage 48.

Dans la configuration retenue, le pied annulaire d'appui 106 est posé sur la paroi supérieure d'appui 52 au-dessus du rail de guidage 50.

La paroi tronconique intérieure 102 est alors montée coulissante sur la bague 87. Le pignon 128 est désengrené de la couronne 126. La position angulaire de la tourelle 16 par rapport à la structure intermédiaire 20 est alors maintenue par les surfaces d'appui en contact du pied 106 et de la paroi 52.

En outre, le pilotage du moteur 130 dans la configuration retenue permet, après engrenage du pignon 128 dans la couronne 126, d'ajuster la position angulaire autour de l'axe A-A' de la structure intermédiaire 20 par rapport à la tourelle 16.

Dans la configuration entraînée, les vérins 124 ont été déployés vers le haut pour soulever la structure intermédiaire 20 à l'écart de la tourelle 16.

Le pied annulaire d'appui 106 est alors disposé au-dessus et à l'écart de la paroi d'appui 52 et la couronne dentée 126 est disposée au-dessus et à l'écart du pignon 128.

Dans cette configuration entraînée, la structure intermédiaire 20 repose par l'intermédiaire des vérins 124 sur la barge 18 et est entraînée en rotation conjointement avec la barge 18 autour de la tourelle 16.

La conduite de transport 24 comprend un tronçon inférieur 140, porté par la tourelle 16, un tronçon intermédiaire 142 porté au moins en partie par la structure intermédiaire 20 et un tronçon supérieur 144 porté par la barge 18.

La conduite 24 comprend en outre un ensemble de déconnexion rapide 146 interposé dans cet exemple entre le tronçon intermédiaire 142 et le tronçon inférieur 140.

Le tronçon inférieur 140 est par exemple réalisé à base d'au moins une partie réalisé en flexible. Par « flexible », on entend au sens de la présente demande une conduite telle que définie par exemple dans les documents normatifs API 17J de l'American Petroleum Institute. Un tel flexible est enroulable sur un tambour de pose, sans déformation plastique significative.

Le tronçon inférieur 140 s'étend sensiblement verticalement entre une extrémité inférieure située sur le fond de l'étendue d'eau et une extrémité supérieure située dans le passage intérieur 48 et raccordée à l'ensemble de déconnexion d'urgence 146.

Le tronçon intermédiaire 142 comprend un raccord rigide coudé 148 monté solidaire de la paroi cylindrique 104 dans le passage 108 et une section 150 de flexible enroulé autour de l'axe A-A' et disposée en appui sur la paroi tronconique intérieure 102 et sur la paroi tronconique extérieure 82.

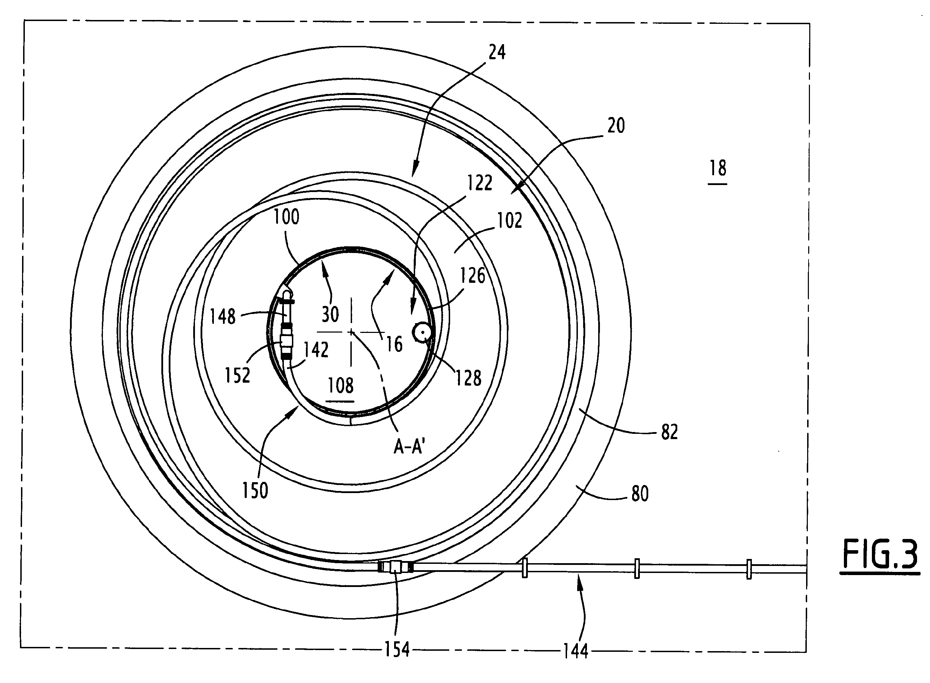

Comme illustré par la Figure 3, la section de flexible 150 comprend ainsi une extrémité intérieure 152 fixée sur le raccord rigide 148 dans le passage 108 et une extrémité extérieure 154 fixée sur le tronçon supérieur 144 en regard de la barge 18.

Ainsi, l'extrémité intérieure 152 est solidaire en rotation de la structure intermédiaire 20, alors que l'extrémité extérieure 154 est solidaire en rotation de la barge 18.

Comme illustré par la Figure 3, la section de flexible 150 forme, entre son extrémité intérieure 152 et son extrémité extérieure 154, au moins une boucle autour de l'axe A-A' dont la longueur varie en fonction de la position angulaire relative de l'extrémité inférieure 152 par rapport à l'extrémité extérieure 154 lors de la rotation de la barge 18 autour de la tourelle 16 lorsque la structure intermédiaire occupe sa configuration retenue.

Dans l'exemple représenté sur la Figure 3, et dans la position angulaire adoptée, la section de flexible 150 forme trois boucles autour de l'axe A-A'.

Ainsi, la section de flexible 150 est propre à accommoder les variations de position angulaire de la barge 18 par rapport à la tourelle 16 sur un débattement angulaire avantageusement supérieur ou égal à 360°, sans qu'il soit nécessaire d'utiliser un joint tournant et sans risque de détériorer la conduite 24.

Le tronçon supérieur 144 est porté par la barge 18 sur une rampe au-dessus de la surface supérieure 68. Il est dans cet exemple formé par une conduite rigide.

Dans cet exemple, l'ensemble de déconnexion rapide 146 est placé dans le passage 48 au voisinage de la structure intermédiaire 20.

L'ensemble 146 comprend une vanne d'isolation supérieure 160 solidaire de l'extrémité libre amont du tronçon intermédiaire 142, une vanne d'isolation inférieure 162 solidaire de l'extrémité libre aval du tronçon inférieur 140 et un connecteur rapide 164, qui peut être déconnecté rapidement en cas d'urgence. Un tel connecteur est connu en langue anglaise sous le nom de « Quick Connect and Disconnect Connector » ou sous l'acronyme « QCDC ».

La conduite de transport 24 est ainsi propre à occuper une configuration raccordée dans laquelle le tronçon intermédiaire 142 est raccordé au tronçon inférieur 140 par l'ensemble de déconnexion rapide 146, et une configuration de déconnexion de l'ensemble de déconnexion rapide 146, dans laquelle le tronçon inférieur 140 et le tronçon intermédiaire 142 sont déconnectés.

Un premier procédé de déconnexion selon l'invention dans l'ensemble de transfert 10 va maintenant être décrit.

Initialement, comme illustré par les Figures 1 à 3, l'ensemble de transfert 10 est raccordé à l'ensemble de fond pour recueillir les hydrocarbures extraits du fond de l'étendue d'eau.

A cet effet, la tourelle 16 est ancrée dans le fond de l'étendue d'eau 12 par l'intermédiaire des lignes d'ancrage 56. Comme précisé plus haut, la tourelle 16 est alors sensiblement fixe en rotation autour de l'axe A-A' par rapport au fond de l'étendue d'eau 12.

La barge 18 est montée rotative autour de la tourelle 16 et est au moins partiellement libre de se déplacer angulairement autour de l'axe A-A' par rapport à la tourelle 16 en fonction des courants et des vents appliqués sur la barge 18. Cette rotation est guidée par les paliers 92A à 92D.

La structure intermédiaire 20 occupe sa configuration retenue sur la tourelle 16. A cet effet, comme décrit plus haut, la paroi cylindrique 104 du tambour rotatif 100 est disposée en appui sur les rails 50 prévus le long du bord supérieur de la tourelle 16.

La structure intermédiaire 20 est maintenue fixe en rotation par rapport à la tourelle 16, par frottement sur le rail 50. La roulette 107 occupe alors sa position rétractée.

La bague 87 d'appui située sur la barge 18 coulisse sous la paroi tronconique intérieure 102 lors de la rotation de la barge 18 autour de la tourelle 16 et de la structure intermédiaire 20. La barge 18 est libre de pivoter autour de la tourelle 16 sans entraîner en rotation la structure intermédiaire 20 autour de l'axe de rotation A-A'.

La conduite de transport de fluide 24 occupe alors sa configuration raccordée.

Ainsi, l'ensemble de déconnexion d'urgence 146 est raccordé et le tronçon inférieur 140 est raccordé au tronçon intermédiaire 142 par l'intermédiaire des vannes d'isolation 160, 162 et du connecteur rapide 164.

Un passage continu de fluide est donc défini successivement depuis le fond de l'étendue d'eau 12 vers la surface à travers le tronçon inférieur 140, le tronçon intermédiaire 142 et le tronçon supérieur 144.

Lors de la rotation de la barge 18 autour de la tourelle 16, l'extrémité extérieure 154 de la section de flexible enroulé 150, fixe en rotation par rapport à la barge 18 se déplace angulairement autour de l'axe A-A' par rapport à l'extrémité intérieure 152 de la section flexible 150 fixe en rotation par rapport à la tourelle 16.

La section de flexible 150 s'enroule ou se déroule de manière correspondante, en appui sur les parois tronconiques de support 102, 82. Ceci permet d'accommoder les variations de la position angulaire de la barge 18 par rapport à la tourelle 16, tout en assurant un transport de fluide à travers la conduite de transport 24.

Lorsqu'une déconnexion doit être effectuée, par exemple si les conditions climatiques se dégradent, les vannes d'isolation 160, 162 sont fermées. Le connecteur d'urgence 164 est déconnecté pour libérer le tronçon inférieur 140 par rapport au tronçon intermédiaire 142.

Le vérin 124 du dispositif de déplacement en translation 120 est alors activé pour soulever la structure intermédiaire 20 par rapport à la tourelle 16 le long de l'axe A-A' et la faire passer de sa configuration retenue à sa configuration entraînée.

Le pied annulaire 106 se soulève à l'écart et au dessus de la paroi d'appui 52.

La structure intermédiaire 20 est alors entraînée en rotation autour de l'axe A-A' par la barge flottante 18. Elle est libre de se déplacer en rotation autour de l'axe A-A' par rapport à la tourelle 16.

Dans cette configuration, l'extrémité intérieure 152 de la section de flexible 150 se déplace alors conjointement avec l'extrémité extérieure 154 de cette section de flexible, de sorte que la rotation de la barge flottante 18 autour de l'axe A-A' n'affecte pas l'enroulement de la section de flexible 150 autour de l'axe A-A'. Ainsi, l'extrémité intérieure 152 reste fixe angulairement par rapport à l'extrémité extérieure 154.

Ainsi, la barge 18 peut effectuer des rotations d'étendue angulaire très importantes autour de la tourelle 16, notamment d'étendue supérieure à un tour, voire même supérieure à plusieurs tours, en fonction des conditions atmosphériques et du courant.

La tourelle 16 reste sensiblement fixe par rapport au fond de l'étendue d'eau 12 en étant maintenue par les moyens d'ancrage 32.

Lorsque les conditions atmosphériques redeviennent normales, il est alors très simple de reconnecter l'installation.

A cet effet, les roulettes 107 sont déployées vers leur position de roulage pour reprendre le poids de la structure 20 puis le vérin 124 de l'ensemble de déplacement 120 est déplacé pour faire passer la structure intermédiaire 20 de sa configuration entraînée à sa configuration retenue.

Le pignon 128 s'engrène alors sur la couronne 126, et le pied d'appui 106 repose sur la paroi d'appui 52.

Puis, le moteur 132 est activé pour aligner angulairement l'extrémité libre du tronçon intermédiaire 142 munie de la vanne 160 avec l'extrémité libre du tronçon inférieur 144 munie de la vanne 162 et reconnecter le connecteur 164. Alors, les roulettes 107 sont rétractées et la connexion effectuée.

Le procédé selon l'invention permet donc d'assurer une déconnexion rapide et sûre d'un ensemble de transfert 10, en cas de conditions extrêmes, tout en permettant un fonctionnement normal satisfaisant lors d'une rotation libre ou pilotée de la barge 18 par rapport à la tourelle 16 autour de l'axe A-A', lorsque la conduite de transport 24 est connectée pour transporter du fluide entre le fond et la surface.

Il est en outre simple de reconnecter chaque conduite de transfert 24 lorsque les conditions sont réunies pour reprendre la production de fluide.

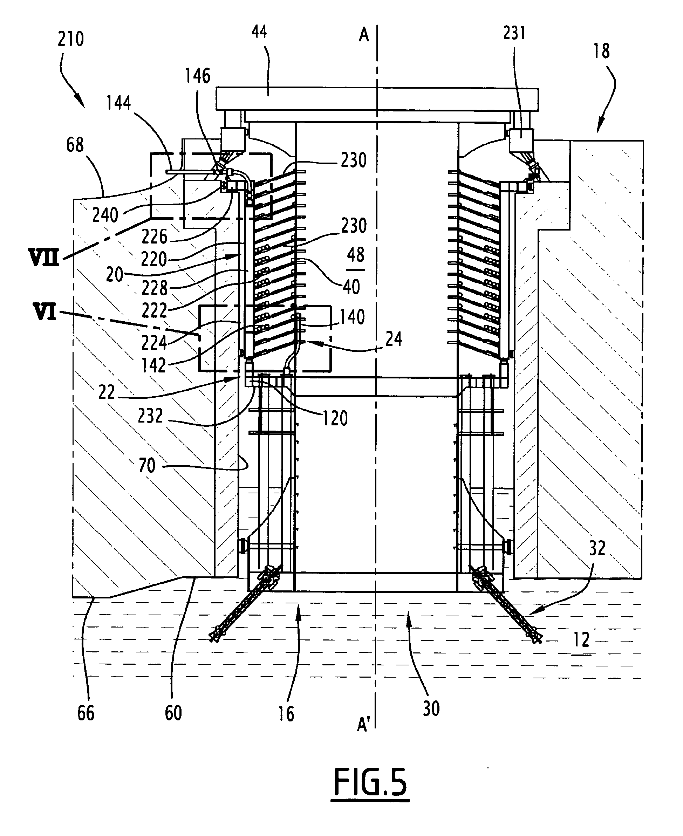

Les Figures 5 à 8 illustrent un deuxième ensemble de transfert 210 selon l'invention.

A la différence du premier ensemble de transfert 10 représenté sur les Figures 1 à 4, la structure intermédiaire 20 est disposée sensiblement totalement dans l'espace annulaire délimité entre la tourelle 16 et la coque 60 dans le puits 70.

La structure intermédiaire 20 comprend ainsi un manchon cylindrique extérieur creux 220 et une pluralité de parois tronconiques extérieures 222 de support de chaque tronçon intermédiaire 142 d'une conduite 24.

Le manchon extérieur 220 comprend une partie inférieure cylindrique 224 creuse d'axe A-A' et une collerette extérieure d'appui 226 qui fait saillie radialement vers l'extérieur à partir du bord supérieur de la partie inférieure cylindrique 224.

La partie inférieure 224 délimite un espace intérieur annulaire 228 pour le passage d'une partie du tronçon intermédiaire 144 de chaque conduite 24.

Les parois tronconiques extérieures 222 sont disposées les unes au dessus des autres le long de l'axe A-A'.

Chaque paroi tronconique 222 fait saillie intérieurement vers l'axe A-A' à partir de la partie inférieure 224. Chaque paroi 222 forme, en projection dans un plan axial passant par l'axe A-A', un angle supérieur à 10°.

Chaque paroi tronconique 222 est destinée à porter une partie de la section de flexible enroulé 150.

La tourelle 16 comporte un manchon cylindrique intérieur 40 s'étendant en regard de la coque 30. Le manchon intérieur 40 porte une pluralité de parois tronconiques intérieures 230 s'étendant en regard de chaque paroi tronconique extérieure 222.

La tourelle 16 comprend également une collerette d'appui 44 disposée au dessus du manchon 40 et faisant saillie radialement par rapport au manchon 40. La collerette d'appui 44 est montée rotative par rapport à la barge 18 sur des supports 231 solidaires de la barge et disposés autour du puits 70, avec interposition de paliers entre les supports 231 et la collerette 44.

En outre, la tourelle 16 délimite, sous le manchon annulaire 220 une surface de support 232 du dispositif de déplacement en translation 120. Ainsi, à la différence du premier ensemble 10, le dispositif de déplacement en translation 120 est porté par la tourelle 16.

La coque 60 de la barge 18 délimite un épaulement d'appui 240 de la collerette 226 s'ouvrant vers l'axe A-A'. L'épaulement 240 est situé dans la partie supérieure du puits 70.

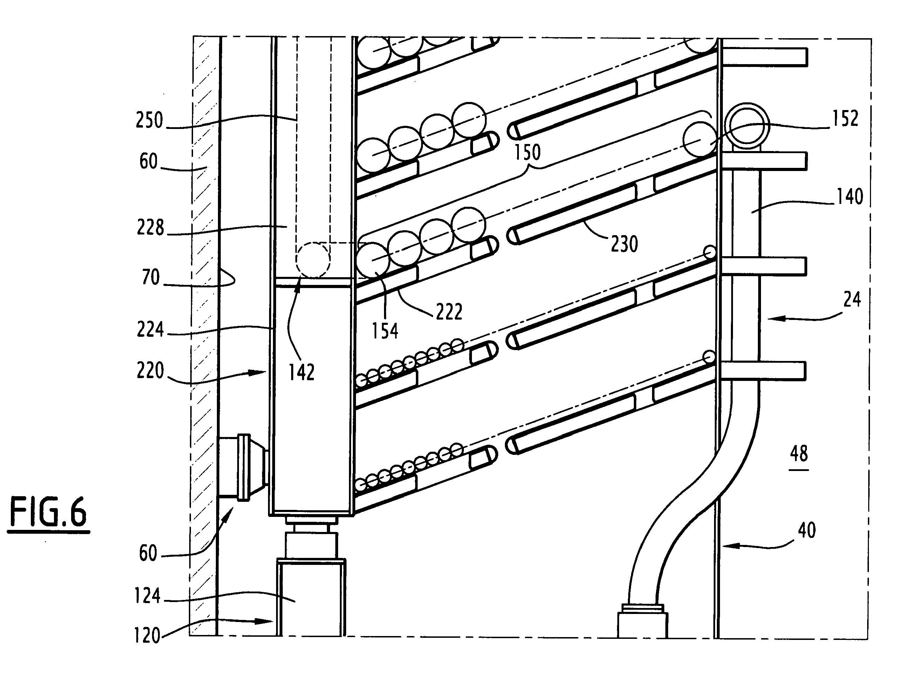

En référence à la Figure 6, chaque tronçon inférieur 140 d'une conduite de transport 24 s'étend jusqu'à une position axiale le long de l'axe A-A' située dans le passage 48 en regard d'une paroi tronconique extérieure 230.

L'extrémité intérieure 152 de chaque tronçon intermédiaire 142 est raccordée à demeure au tronçon inférieur 140 à travers le manchon intérieur 40 de la tourelle, sans interposition d'un ensemble de déconnexion rapide.

Chaque tronçon intermédiaire 142 comprend, comme décrit précédemment, une section de flexible enroulé 150, qui s'étend dans l'espace annulaire défini par le puits 70 entre le manchon intérieur 40 et le manchon extérieur 220, en appui sur des parois tronconiques 222, 230 en regard.

L'extrémité extérieure 154 de la section de flexible 150 est fixée sur le manchon extérieur 220. Elle est raccordée à travers le manchon extérieur 220 à une partie supérieure 250 du tronçon intermédiaire 142 qui s'étend verticalement à travers l'espace annulaire 228 jusqu'à la collerette 226.

Les parties supérieures 250 des différents tronçons intermédiaires 142 sont réparties dans l'espace annulaire 228 en étant séparées angulairement les unes des autres autour de l'axe A-A'.

En outre, à la différence de l'ensemble de transfert 10, l'ensemble de déconnexion 146 du deuxième ensemble de transfert 210 est interposé entre le tronçon intermédiaire 142 et le tronçon supérieur 144.

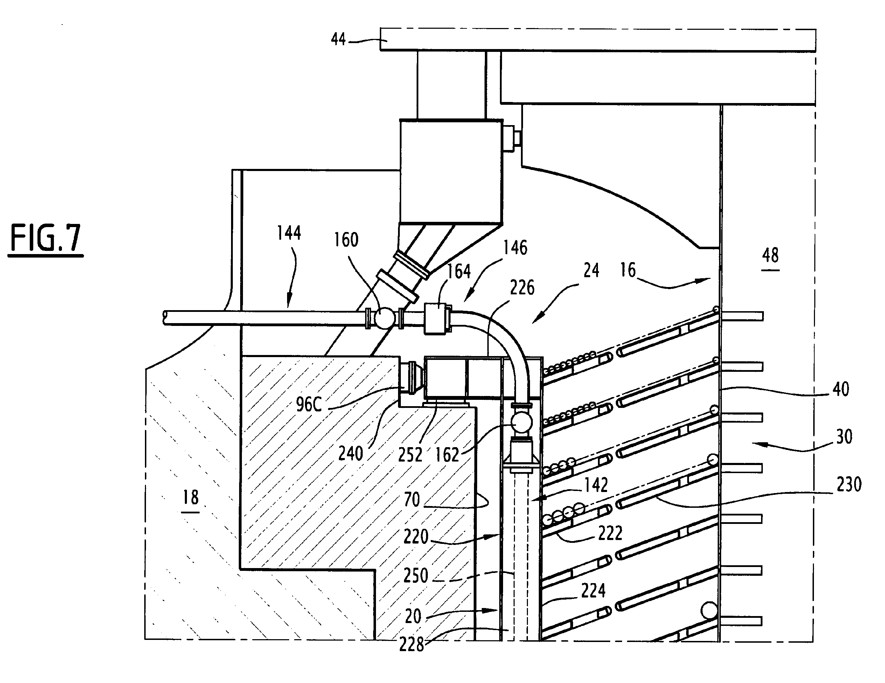

A cet effet, comme illustré par la Figure 7, la vanne d'isolation supérieure 160 est disposée à l'extrémité libre amont du tronçon supérieur 144 au-dessus de la collerette 226 et de l'épaulement 240 et la vanne d'isolation inférieure 162 est montée sur l'extrémité libre aval de la partie supérieure 250 dans l'espace annulaire 228.

Le connecteur 164 est disposé au-dessus de la collerette 226, entre les vannes 160, 162.

A la différence de l'ensemble 10 représenté sur les Figures 1 à 4, la structure intermédiaire 20 de l'ensemble 210 occupe sa configuration entraînée lors de la production de fluide, lorsque la conduite 24 est connectée.

Ainsi, la collerette 226 du manchon extérieur 220 repose sous l'effet de son propre poids sur un support 252 prévu sur l'épaulement 240 délimité par le corps.

Dans cette configuration, la barge 18 et la structure intermédiaire 20 sont déplaçables conjointement en rotation autour de la tourelle 16.

Lors de cette rotation, les supports 231 solidaires de la barge pivotent autour de l'axe A-A' sous la collerette 44 par l'intermédiaire des paliers.

La section de flexible enroulé 150 de chaque conduite 24 s'enroule et se déroule alors sur les parois tronconiques respectives 222, 230 entre l'extrémité intérieure 152 qui est fixe en rotation par rapport à la tourelle 16 et l'extrémité extérieure 154 qui est solidaire en rotation de la barge 18.

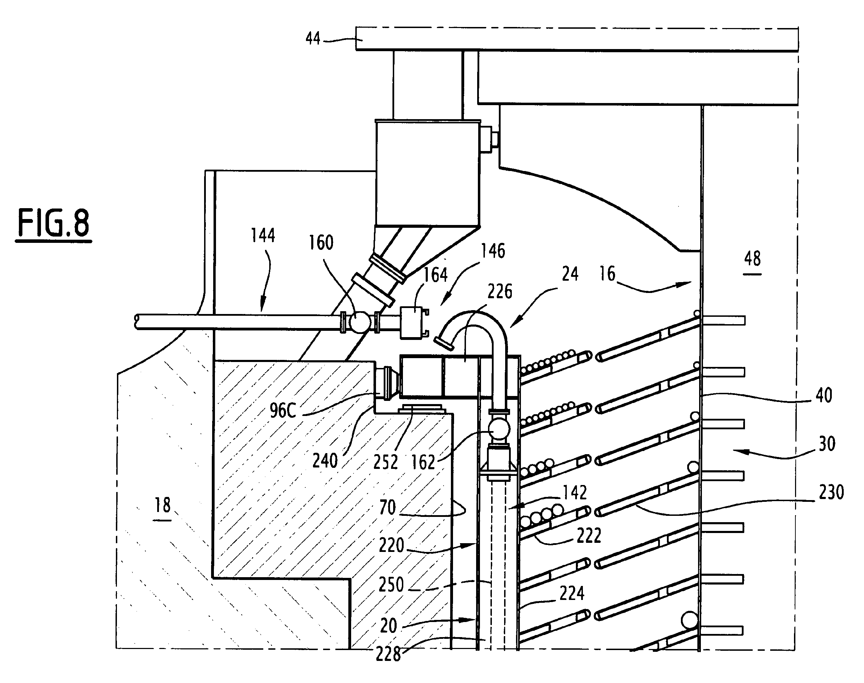

En cas de déconnexion d'urgence, le connecteur 164 est déconnecté comme représenté sur la Figure 8, après fermeture des vannes d'isolation 160, 162.

Chaque vérin 124 solidaire de la tourelle 16 soulève alors le manchon 220 pour le déplacer en translation le long de l'axe A-A'. Ceci désengage la structure intermédiaire 20 de la barge 18 et fait passer la structure intermédiaire 20 de sa configuration entraînée à sa configuration retenue.

Dans la configuration retenue représentée sur la Figure 8, le manchon 220 et sa collerette 226 sont placés totalement à l'écart de la barge 18 au dessus du support 252 reçu dans l'épaulement 240. La barge 18 est donc libre de pivoter sous la structure intermédiaire 20 sans l'entraîner en rotation.

La structure intermédiaire 20 est par contre maintenue fixe en rotation par rapport à la tourelle 16. Ainsi l'extrémité extérieure 154 de la section flexible reste fixe angulairement par rapport à l'extrémité intérieure 152.

La conduite 24 étant coupée au niveau de l'ensemble de déconnexion 146, la barge flottante 18 est libre de tourner autour de la tourelle 16 sur des déplacements angulaires très élevés, notamment supérieurs à un tour, sans modifier la position angulaire de l'extrémité extérieure 154 de la section de flexible enroulé 150 par rapport à l'extrémité intérieure 152 de cette section et donc la torsion de la section de flexible enroulé 150.

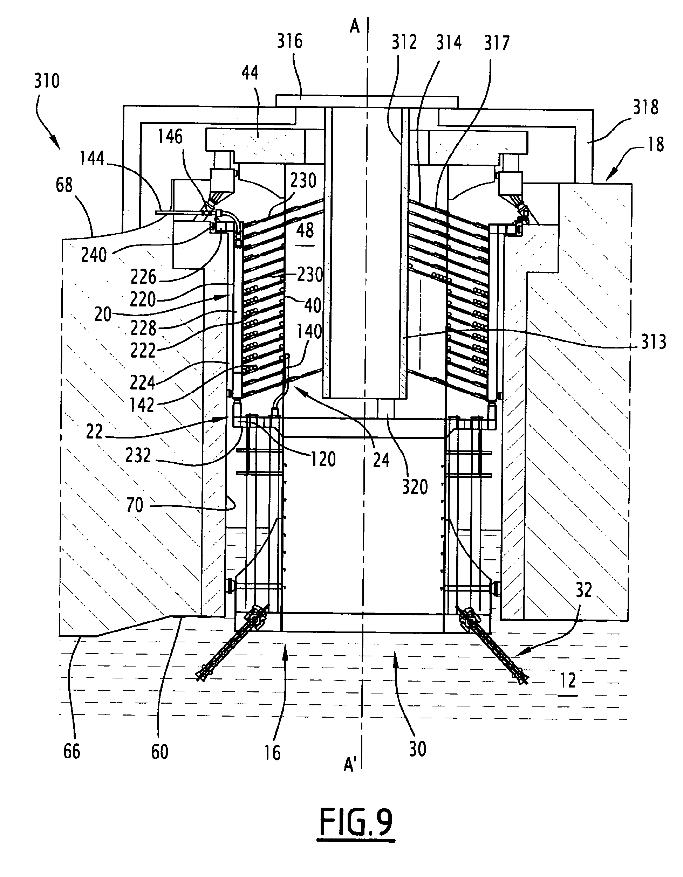

Un troisième ensemble de transport 310 selon l'invention est illustré sur la Figure 9. A la différence du deuxième ensemble 210, ce troisième ensemble 310 comprend une structure intermédiaire additionnelle 312 de support des sections de flexible 150 d'un groupe additionnel de conduites 24.

La structure additionnelle 312 comprend un corps tubulaire 313 disposé dans le passage 48 délimité au centre de la tourelle 16, une pluralité de parois tronconiques auxiliaires 314 de support, et une collerette auxiliaire 316 d'appui sur un support 318 annulaire solidaire de la barge 18.

Le corps 313 s'étend le long de l'axe A-A' en regard du manchon intérieur 40 de la tourelle 16.

Chaque paroi auxiliaire 314 fait saillie à partir du corps 313 vers le manchon intérieur 40. Chaque paroi 314 s'étend en regard d'une paroi tronconique de support 317 correspondante solidaire de la surface intérieure du manchon 40.

Chaque paire de paroi auxiliaire 314, 317 porte une section de flexible 150 d'une conduite 24. Comme décrit précédemment, une première extrémité de la section de flexible 150 est montée solidaire du corps 313 et une deuxième extrémité de la section de flexible 150 est montée solidaire du manchon 40.

Le support annulaire 318 fait saillie radialement autour et au dessus de la collerette 44 et du puits 70. Il est fixé extérieurement sur une surface supérieure de la barge 18.

La structure additionnelle 312 est ainsi mobile en translation le long de l'axe A-A' entre une configuration entraînée en rotation par la barge 18, dans laquelle la collerette 316 repose sur le support 318, et une configuration retenue par la tourelle 16, dans laquelle la collerette 316 est disposée à l'écart de la barge 18.

Comme décrit précédemment, un vérin 320 porté par la tourelle est disposé sous le corps tubulaire 313 pour déplacer la structure additionnelle 312 de sa configuration entraînée à sa configuration retenue.

Ainsi, dans la configuration entrainée, les extrémités de chaque section de flexible 150 portée par chaque paire de parois de support 314, 317 en regard sont mobiles angulairement l'une par rapport à l'autre. Dans la configuration retenue, les extrémités de chaque section de flexible 150 portée par chaque paire de parois de support 314, 317 en regard sont fixes angulairement l'une par rapport à l'autre.

De manière avantageuse, la tourelle 16 comprend deux corps indépendants 16', 16" montés de manière libérable l'un sur l'autre par l'intermédiaire de moyens de solidarisation connus 600.

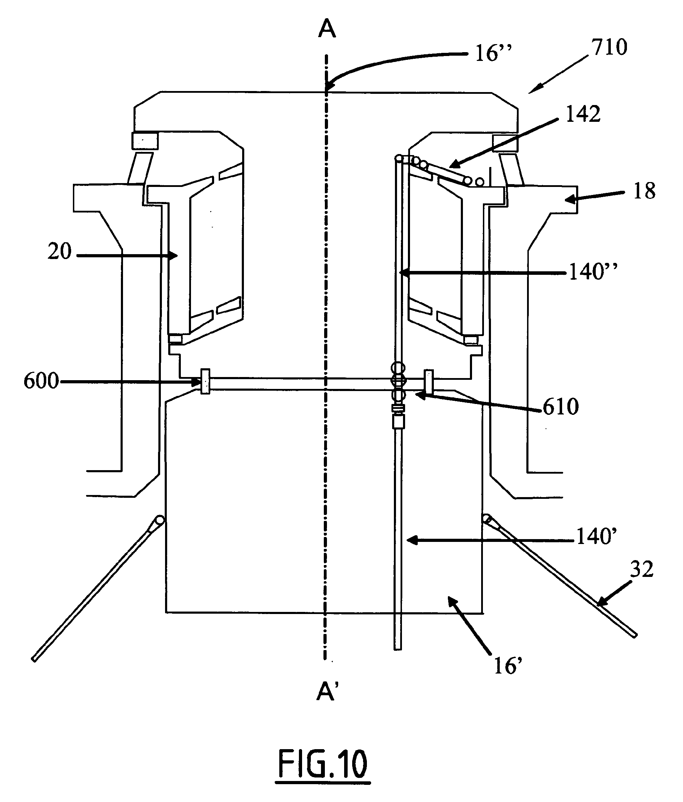

La figure 10 illustre schématiquement une telle tourelle employée avec le système de transfert selon le second mode de réalisation de l'invention. La figure 10 montre en effet un ensemble de transfert 710 comprenant une tourelle 16 ancrée sur le fond marin et une barge 18 montée rotative autour de la tourelle 16. La figure 10 montre également la structure intermédiaire 20 formant un manchon cylindrique extérieur creux selon le mode de réalisation illustré par les figures 5 à 9.

Le procédé de déconnexion de l'ensemble de transfert constitué d'un corps supérieur de tourelle 16", d'une structure intermédiaire 20 et d'une barge 18 fonctionne de manière analogue au dispositif qui a été décrit précédemment en référence aux figures 5 à 9. Aussi on ne s'attachera ici qu'à décrire les particularités de la tourelle 16.

La tourelle 16 comprend un corps inférieur 16' flottant. En outre, ce corps inférieur est déconnectable du corps supérieur 16" de la tourelle comme on l'explicitera ci-après.

Le corps inférieur 16' de la tourelle est rendu solidaire du corps de supérieur 16" de la tourelle par des moyens de solidarisation connus 600. Ce corps inférieur 16' de tourelle porte le système d'amarrage 32 de la barge 18. En outre, sur la figure 10, le tronçon inférieur 140 de la conduite de transport de fluide comprend une première partie 140" traversant le corps supérieur 16" de la tourelle selon une direction A-A', verticale sur la Figure 10 et une deuxième partie 140' traversant le corps inférieur 16' de la tourelle selon une direction A-A'. Les deux parties 140', 140" constituant le tronçon inférieur 140 sont raccordées par un système de déconnexion 610 disposé entre le corps supérieur 16" et le corps inférieur 16'. La partie inférieure 140' s'étend généralement jusqu'au fond marin.

Le corps supérieur 16" de la tourelle est muni de support de roulements pour assurer la rotation de barge autour de celui-ci tandis que le corps inférieur 16' ne possède pas de support de roulements propre. En mode de fonctionnement normal, le corps inférieur 16' de la tourelle est solidaire du corps supérieur 16" de la tourelle. Ainsi, la barge 18 est rotative autour des deux corps de tourelle 16' et 16" par l'intermédiaire des supports de roulement du corps supérieur 16" de la tourelle.

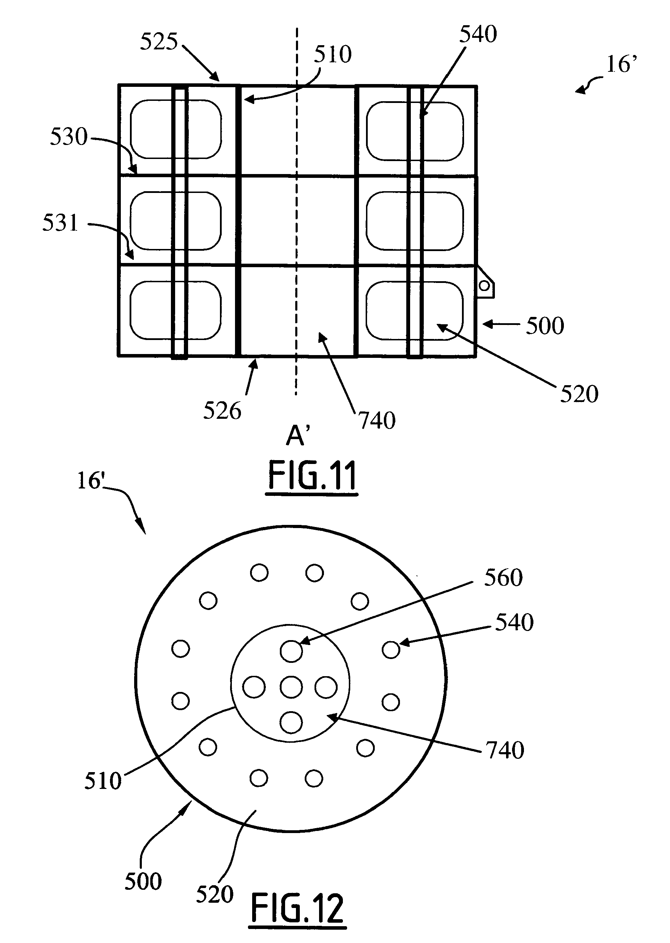

La figure 11 est une vue de détail du corps inférieur 16' de tourelle. Ce corps inférieur 16' présente une paroi extérieure 500 d'axe A-A' formant un premier manchon externe 500. Un second manchon cylindrique creux 510 de hauteur selon l'axe A-A' similaire à la hauteur du manchon externe 500 est disposé à l'intérieur du premier manchon 500, délimitant ainsi un espace annulaire 520 entre les deux manchons. Les manchons 510, 520 sont obturés par des parois supérieure et inférieure 525, 526.

Des tubes droits 540 (« I tube» » en langue anglaise) de diamètre suffisant pour recevoir les parties inférieures 140' des tronçons inférieurs 140 sont disposés dans l'espace annulaire 520. Les extrémités des tubes droits 540 débouchent au niveau des parois supérieure 525 et inférieure 526 délimitant chacun un passage de circulation selon la direction axiale A-A'. Ces passages de circulation sont destinés à recevoir les parties inférieures 140' de chaque tronçon inférieur 140. Ils sont répartis à intervalles réguliers sur la circonférence de l'espace annulaire du corps inférieur 16'. Ces tubes droits 540 assurent également un renforcement de la structure du corps inférieur 16' de la structure.

La figure 12 montre sur une vue en coupe transversale perpendiculaire à l'axe A-A' la répartition régulière des tubes droits 540 dans l'espace annulaire 520.

Des entretoises 530, 531 sont disposées à intervalles le long de l'axe A-A' dans un plan perpendiculaire à l'axe A-A' segmentant l'espace annulaire 520 du corps inférieur 16' en différents compartiments étanches indépendants. Préférentiellement, les compartiments du corps inférieur 16' de tourelle sont pourvus de vannes pour contrôler et ajuster la flottabilité de l'ensemble du corps inférieur 16'.

Avantageusement, l'espace annulaire central 740 peut être utilisé pour installer des conduits 560 et des pompes sous marines afin de convoyer de l'eau froide à la surface de la barge 18 utile pour le refroidissement des équipements disposées sur la barge 18. Ces conduits 560 peuvent être en matériau polymérique et s'étendent à l'intérieur du puits central 740 de la tourelle selon l'axe A-A' entre la surface de la barge et une profondeur de plusieurs dizaines de mètres.

Le procédé de déconnexion du corps inférieur 16' portant les parties inférieures 140' des tronçons inférieurs 140 va maintenant être décrit. Cette étape a lieu après l'étape de déconnexion du tronçon intermédiaire 142 et du tronçon inférieur 140 autorisant une libre rotation de la barge 18 autour de la tourelle 16 et qui a fait l'objet d'une description précédemment.

La déconnexion du corps inférieur 16' s'exécute de la manière suivante. D'abord, la première partie 140' et la deuxième partie 140" du tronçon inférieur 40 sont isolées et déconnectées en fermant les vannes du système de déconnexion 610. Puis, le corps inférieur 16' de la tourelle est déconnecté du corps supérieur 16" de la tourelle. La flottabilité résiduelle du corps inférieur 16' de la tourelle en place permet alors la descente de celui-ci. Si nécessaire, le corps inférieur 16' de la tourelle est ballasté légèrement pour initier la descente du corps inférieur 16'.

Le corps inférieur 16' de la tourelle est ensuite stabilisé à une profondeur largement en dessous de la barge 18. Il suffit pour cela d'ajuster la flottabilité du corps inférieur 16' pour qu'il atteigne et conserve sa position d'équilibre. L'installation de surface 18 peut alors évacuée du site d'exploitation.

Il peut être avantageux d'évacuer l'installation de surface portant le corps supérieur 16" de la tourelle lorsque les conditions climatiques sont extrêmes ou lorsque l'installation de surface est requise sur un autre site.

Ainsi, déconnecté du corps supérieur 16" de la tourelle, le corps inférieur 16' de la tourelle constitue avantageusement une installation sous-marine de support temporaire des parties inférieures 140' de conduites montantes et des moyens d'ancrage 32 de la barge 18. Ceux-ci peuvent ensuite être récupérés comme cela va maintenant être décrit.

Selon encore un autre mode d'utilisation avantageux du corps inférieur 16' de la tourelle, le corps inférieur de tourelle 16' supporte les parties inférieures 140' et les moyens d'ancrage de la barge 18, à une profondeur d'eau de plusieurs dizaines de mètres suffisante pour éviter toute collision avec une installation de surface. L'installation de surface ou la barge 18 est ensuite amenée à l'aplomb du corps inférieur 16'. La flottabilité du corps inférieur 16' est alors augmentée pour provoquer la remontée du corps inférieur 16' vers la surface. Des câbles de guidage permettent de guider le corps inférieur 16' dans son logement ménagé dans le puits de l'installation de surface 18 sous le corps supérieur 16" de la tourelle. Les parties 140' et 140" du tronçon inférieur sont ensuite alignées en opérant une rotation de la barge 18 autour de la tourelle, le corps supérieur 16" étant maintenu immobile en rotation par rapport à la barge 18. Puis, le corps inférieur 16' est solidarisé au corps supérieur 16".

La tourelle représentée sur la figure 10 est décrite en relation avec le second ensemble de transfert de l'invention. Toutefois, elle peut être utilisée avec le premier mode de réalisation de l'ensemble de transfert.

Dans le mode de réalisation des figures 5 à 8, la structure intermédiaire 20 est soulevée grâce à des vérins pour déconnecter physiquement la structure intermédiaire 20 de la barge 18, de sorte que la structure intermédiaire 220 soit solidaire de la tourelle 16.

Dans une variante avantageuse, qui évite le soulèvement de la structure intermédiaire 20, le dispositif de déplacement vertical 124 (formé par des vérins) est remplacé par des paliers de rotation (roulements ou patins) sur les surfaces 232 et 226 et par un dispositif adéquat de blocage en rotation de la structure intermédiaire 20 par rapport à la tourelle 16 qui permet de solidariser la structure intermédiaire 20 à la tourelle 16 en position déconnectée sans déplacement vertical de la structure intermédiaire 20 par rapport à la tourelle 16 ou par rapport à la barge 18.

Pour éviter de détériorer les conduites une fois déconnectées, leurs extrémités supérieures sont maintenues sous tension, par exemple en les fixant conjointement sur une couronne supérieure.

## Revendications

1. Procédé de déconnexion d'un ensemble (10 ; 210 ; 310) de transfert de fluide entre le fond d'une étendue d'eau (12) et la surface (14), l'ensemble de transfert (10 ; 210 ; 310) comprenant :
- au moins une conduite (24) de transport de fluide comportant un tronçon inférieur (140), un tronçon intermédiaire (142), un tronçon supérieur (144), et un organe (164) de déconnexion rapide interposé entre le tronçon intermédiaire (142) et l'un du tronçon inférieur (140) et du tronçon supérieur (144) ;
- une tourelle (16) portant le tronçon inférieur (140), la tourelle (16) comprenant des moyens (32) d'ancrage dans le fond de l'étendue d'eau (12) ;
- une barge (18) flottante montée rotative sur la tourelle (16) autour d'un axe (A-A') de rotation, la barge (18) portant le tronçon supérieur (144),
le tronçon intermédiaire (142) comprenant au moins une section (150) de flexible enroulé autour de l'axe de rotation (A-A'),
le procédé comprenant une étape de raccordement dans laquelle le tronçon intermédiaire (142) est raccordé à l'un du tronçon inférieur (140) et du tronçon supérieur (144) par l'intermédiaire de l'organe de déconnexion rapide (164), et une étape de déconnexion comprenant la déconnexion de l'organe de déconnexion rapide (164),
**caractérisé en ce que** l'ensemble de transfert (10 ; 210 ; 310) comprend au moins une structure intermédiaire (20) de support au moins partiel de la section (150) de flexible enroulé, la structure intermédiaire (20) étant montée entre la tourelle (16) et la barge (18), entre une configuration entraînée en rotation conjointe avec la barge (18) autour de l'axe de rotation par rapport à la tourelle (16) et une configuration retenue en rotation autour de l'axe de rotation (A-A') par la tourelle (16),
et **en ce que**, lors de l'étape de raccordement, la structure intermédiaire (20) est placée dans l'une de la configuration entraînée et de la configuration retenue, l'étape de déconnexion comprenant le passage de la structure intermédiaire (20) vers l'autre de la configuration entraînée et de la configuration retenue.

2. Procédé selon la revendication 1, **caractérisé en ce que** la structure intermédiaire (20) comprend une paroi (102 ; 222) de support de la section de flexible enroulé (150) s'étendant autour de l'axe de rotation, l'étape de raccordement comprenant l'enroulement et/ou le déroulement de la section de flexible enroulé sur la paroi de support (102 ; 222) autour de l'axe de rotation (A-A') lors de la rotation de la barge (18) par rapport à la tourelle (16).

3. Procédé selon l'une des revendications 1 ou 2, **caractérisé en ce que** l'étape de déconnexion comprend le déplacement de la structure intermédiaire (20) en translation le long de l'axe de rotation (A-A') pour faire passer la structure intermédiaire (20) de l'une de sa configuration entraînée et de sa configuration retenue vers l'autre de sa configuration entraînée et de sa configuration retenue.

4. Procédé selon l'une quelconque des revendications précédentes, **caractérisé en ce que** lors de l'étape de raccordement, la structure intermédiaire (20) occupe sa configuration retenue.

5. Procédé selon l'une quelconque des revendications 1 à 3, **caractérisé en ce que** lors de l'étape de raccordement, la structure intermédiaire (20) occupe sa configuration entraînée.

6. Procédé selon l'une quelconque des revendications précédentes, **caractérisé en ce qu'**après l'étape de déconnexion, la barge (18) est montée librement rotative autour de la tourelle (16), les extrémités (152, 154) de la section de flexible enroulé (150) restant sensiblement fixes angulairement l'une par rapport à l'autre autour de l'axe de rotation (A-A').

7. Ensemble (10 ; 210 ; 310) de transfert de fluide entre le fond d'une étendue d'eau (12) et la surface du type comprenant :
- au moins une conduite (24) de transport de fluide comportant un tronçon inférieur (140), un tronçon intermédiaire (142), un tronçon supérieur (144), et un organe (164) de déconnexion rapide interposé entre le tronçon intermédiaire (142) et l'un du tronçon inférieur (140) et du tronçon supérieur (142),
- une tourelle (16) portant le tronçon inférieur (140), la tourelle (16) comprenant des moyens (32) d'ancrage dans le fond de l'étendue d'eau (12) ;
- une barge (18) flottante montée rotative sur la tourelle (16) autour d'un axe (A-A') de rotation, la barge (18) portant le tronçon supérieur (18),
le tronçon intermédiaire (142) comprenant au moins une section (150) de flexible enroulé autour de l'axe de rotation (A-A'),
la conduite de transport (24) étant propre à occuper une configuration raccordée dans laquelle le tronçon intermédiaire (142) est raccordé à l'un du tronçon inférieur (140) et du tronçon supérieur (144) par l'intermédiaire de l'organe de déconnexion rapide (164), et une configuration de déconnexion de l'organe de déconnexion rapide (164),
**caractérisé en ce que** l'ensemble de transfert (10 ; 210 ; 310) comprend une structure intermédiaire (20) de support au moins partiel de la section (150) de flexible enroulé, la structure intermédiaire (20) étant montée entre la tourelle (16) et la barge (18), entre une configuration entraînée en rotation conjointe avec la barge (18) autour de l'axe de rotation par rapport à la tourelle (16) et une configuration retenue en rotation autour de l'axe de rotation (A-A') par la tourelle (16).

8. Ensemble (10 ; 210 ; 310) selon la revendication 7, **caractérisée en ce que** la structure intermédiaire (20) comprend une paroi (102 ; 222) de support de la section de flexible enroulé (150) s'étendant autour de l'axe de rotation (A-A'), la section de flexible enroulé (150) étant disposée au moins partiellement sur la paroi de support (102 ; 222).

9. Ensemble (210 ; 310) selon la revendication 8, **caractérisée en ce qu'**il comprend une pluralité de conduites de transport de fluide (24), la structure intermédiaire (20) comprenant une paroi (222) de support pour la section de flexible enroulé (150) de chaque conduite de transport (24), les parois de support (222) étant disposés les unes au-dessus des autres le long de l'axe de rotation (A-A').

10. Ensemble (210 ; 310) selon l'une quelconque des revendications 7 à 9, **caractérisée en ce que** dans la configuration raccordée de la conduite, la structure intermédiaire (20) occupe sa configuration entraînée.

11. Ensemble (10) selon l'une quelconque des revendications 7 à 9, **caractérisé en ce que** dans la configuration raccordée de la conduite, la structure intermédiaire (20) occupe sa configuration retenue.

12. Ensemble (10) selon la revendication 11, **caractérisé en ce qu'**il comprend un dispositif (122) de réglage de la position angulaire de la structure intermédiaire (20) par rapport à la tourelle (16) dans la configuration retenue.

13. Ensemble (10 ; 210 ; 310) selon l'une quelconque des revendications 7 à 12, **caractérisé en ce que** dans une première de la configuration entraînée et de la configuration retenue, les extrémités (152, 154) de la section de flexible enroulé (150) sont mobiles angulairement l'une par rapport à l'autre autour de l'axe de rotation (A-A') lors de la rotation de la barge (18) autour de la tourelle (16), et **en ce que** dans une deuxième de la configuration entraînée et de la configuration retenue, les extrémités (152, 154) de la section de flexible enroulé (150) restent sensiblement fixes angulairement l'une par rapport à l'autre autour de l'axe de rotation (A-A') lors de la rotation de la barge (18) autour de la tourelle (16).

14. Ensemble (310) selon l'une quelconque des revendications 7 à 13, **caractérisé en ce qu'**il comprend une structure intermédiaire (312) de support au moins partiel d'une section (150) de flexible enroulé d'une conduite de transport additionnelle (24), la structure intermédiaire additionnelle (312) étant montée entre la tourelle (16) et la barge (18), entre une configuration entraînée en rotation conjointe avec la barge (18) autour de l'axe de rotation et une configuration retenue en rotation autour de l'axe de rotation (A-A') par la tourelle (16), la structure intermédiaire (20) étant disposée à l'extérieur de la tourelle (16), la structure intermédiaire additionnelle (312) étant disposée dans la tourelle (16).

15. Ensemble selon l'une quelconque des revendications 7 à 14, **caractérisé en ce que** la tourelle (16) comprend un corps supérieur (16") et un corps inférieur (16'), le corps supérieur (16") et le corps inférieur (16') étant montés de manière libérable l'un sur l'autre, le tronçon inférieur (140) comprenant une première partie (140') et une deuxième partie (140") raccordées par un organe de déconnexion (610).

16. Ensemble selon la revendication 15, **caractérisé en ce que** le corps inférieur (16') de tourelle porte les moyens d'ancrage (32) de la barge (18).

## Patentansprüche

1. Verfahren zum Trennen einer Vorrichtung (10; 210; 310) zum Übertragen von Fluid zwischen dem Grund eines Gewässers (12) und der Oberfläche (14), wobei die Vorrichtung (10; 210; 310) aufweist:
mindestens eine Fluidtransportleitung (24), welche einen unteren Abschnitt (140), einen mittleren Abschnitt (142), einen oberen Abschnitt (144) und ein Schnelltrennteil (164), welches zwischen dem mittleren Abschnitt (142) und einem von dem unteren Abschnitt (140) und dem oberen Abschnitt (144) eingefügt ist, aufweist;
einen Turm (16), welcher den unteren Abschnitt (140) trägt, wobei der Turm (16) Mittel (32) zur Verankerung im Grund des Gewässers (12) aufweist;
einen schwimmenden Frachtkahn (18), welcher um eine Drehachse (A-A') drehbar über dem Turm (16) angeordnet ist, wobei der Frachtkahn (18) den oberen Abschnitt (144) trägt,
wobei der mittlere Abschnitt (142) mindestens einen Bereich (150) von Schlauch aufweist, welcher um die Drehachse (A-A') aufgerollt ist,
wobei das Verfahren einen Verbindungsschritt aufweist, bei welchem der mittlere Abschnitt (142) mit einem von dem unteren Abschnitt (140) und dem oberen Abschnitt (144) mittels des Schnelltrennteils (164) verbunden wird, sowie einen Trennschritt, welcher das Trennen des Schnelltrennteils (164) aufweist,
**dadurch gekennzeichnet, dass** die Vorrichtung zum Übertragen (10; 210; 310) mindestens eine Zwischenstruktur (20) zum mindestens teilweisen Stützen des Bereichs (150) aufgerollten Schlauchs aufweist, wobei die Zwischenstruktur (20) zwischen dem Turm (16) und dem Frachtkahn (18), montiert ist zwischen einer Konfiguration, die geübt ist, gemeinsam mit dem Frachtkahn (18) um die Drehachse bezüglich des Turms (16) zu drehen, und einer Haltekonfiguration in einer Drehung um die Drehachse (A-A') um den Turm (16),
und dadurch, dass im Verbindungsschritt die Zwischenstruktur (20) in einer von der Konfiguration, die geübt ist, und der Haltekonfiguration angeordnet wird, wobei der Trennschritt den Übergang der Zwischenstruktur (20) zu der anderen von der Konfiguration, die geübt ist, und der Haltekonfiguration aufweist.

2. Verfahren gemäß Anspruch 1, **dadurch gekennzeichnet, dass** die Zwischenstruktur (20) eine Wand (102; 222) zum Stützen des Bereichs (150) aufgerollten Schlauchs aufweist, welche sich um die Drehachse erstreckt, wobei der Verbindungsschritt das Aufrollen und/oder Abrollen des Bereichs aufgerollten Schlauchs auf die Stützwand (102; 222) um die Drehachse (A-A') während der Drehung des Frachtkahns (18) in Bezug auf den Turm (16) aufweist.

3. Verfahren gemäß einem der Ansprüche 1 oder 2, **dadurch gekennzeichnet, dass** der Trennungsschritt das Verlagern der Zwischenstruktur (20) als Translation entlang der Drehachse (A-A') aufweist, um die Zwischenstruktur (20) aus einer von ihrer Konfiguration, die geübt ist, und ihrer Haltekonfiguration in die andere von ihrer Konfiguration, die geübt ist, und ihrer Haltekonfiguration übergehen zu lassen.

4. Verfahren gemäß einem der vorhergehenden Ansprüche, **dadurch gekennzeichnet, dass** im Verbindungsschritt die Zwischenstruktur (20) ihre Haltekonfiguration einnimmt.

5. Verfahren gemäß einem der Ansprüche 1 bis 3, **dadurch gekennzeichnet, dass** im Verbindungsschritt die Zwischenstruktur (20) ihre Konfiguration, die geübt ist, einnimmt.

6. Verfahren gemäß einem der vorhergehenden Ansprüche, **dadurch gekennzeichnet, dass** nach dem Trennungsschritt der Frachtkahn (18) frei um den Turm (16) drehbar montiert ist, wobei die Enden (152, 154) des Bereichs aufgerollten Schlauchs (150) um die Drehachse (A-A') herum eines in Bezug auf das andere winkelmäßig etwa fest verbleiben.

7. Vorrichtung (10; 210; 310) zum Übertragen von Fluid zwischen dem Grund eines Gewässers (12) und der Oberfläche, von einer Art, welche aufweist:
mindestens eine Fluidtransportleitung (24), welche einen unteren Abschnitt (140), einen mittleren Abschnitt (142), einen oberen Abschnitt (144) und ein Schnelltrennteil (164), welches zwischen dem mittleren Abschnitt (142) und einem von dem unteren Abschnitt (140) und dem oberen Abschnitt (142) eingefügt ist, aufweist;
einen Turm (16), welcher den unteren Abschnitt (140) trägt, wobei der Turm (16) Mittel (32) zur Verankerung im Grund des Gewässers (12) aufweist;
einen schwimmenden Frachtkahn (18), welcher um eine Drehachse (A-A') drehbar über dem Turm (16) angeordnet ist, wobei der Frachtkahn (18) den oberen Abschnitt (18) trägt,
wobei der mittlere Abschnitt (142) mindestens einen Bereich (150) von Schlauch aufweist, welcher um die Drehachse (A-A') aufgerollt ist,
wobei die Transportleitung (24) dazu geeignet ist, eine verbundene Konfiguration, in welcher der mittlere Abschnitt (142) mit einem von dem unteren Abschnitt (140) und dem oberen Abschnitt (144) mittels des Schnelltrennteils (164) verbunden ist, und eine Konfiguration einer Trennung von dem Schnelltrennteil (164) einzunehmen,
**dadurch gekennzeichnet, dass** die Vorrichtung zum Übertragen (10; 210; 310) eine Zwischenstruktur (20) zum mindestens teilweisen Stützen des Bereichs (150) aufgerollten Schlauchs aufweist, wobei die Zwischenstruktur (20) zwischen dem Turm (16) und dem Frachtkahn (18) montiert ist, zwischen einer Konfiguration, die geübt ist in gemeinsamer Drehung mit dem Frachtkahn (18) um die Drehachse bezüglich des Turms (16), und einer Haltekonfiguration in einer Drehung um die Drehachse (A-A') um den Turm (16).

8. Vorrichtung (10; 210; 310) gemäß Anspruch 7, **dadurch gekennzeichnet, dass** die Zwischenstruktur (20) eine Wand (102; 222) zum Stützen des Bereichs aufgerollten Schlauchs (150) aufweist, welche sich um die Drehachse (A-A') erstreckt, wobei der Bereich (150) aufgerollten Schlauchs mindestens teilweise auf der Stützwand (102; 222) angeordnet ist.

9. Vorrichtung (10; 210; 310) gemäß Anspruch 8, **dadurch gekennzeichnet, dass** sie eine Mehrzahl von Fluidtransportleitungen (24) aufweist, wobei die Zwischenstruktur (20) eine Stützwand (222) für den Bereich (150) aufgerollten Schlauchs jeder Transportleitung (24) aufweist, wobei die Stützwände (222) entlang der Drehachse (A-A') untereinander angeordnet sind.

10. Vorrichtung (10; 210; 310) gemäß einem der Ansprüche 7 bis 9, **dadurch gekennzeichnet, dass** die Zwischenstruktur (20) in der verbundenen Konfiguration der Leitung ihre Konfiguration, die geübt ist, einnimmt.

11. Vorrichtung (10) gemäß einem der Ansprüche 7 bis 9, **dadurch gekennzeichnet, dass** die Zwischenstruktur (20) in der verbundenen Konfiguration der Leitung ihre Haltekonfiguration einnimmt.

12. Vorrichtung (10) gemäß Anspruch 17, **dadurch gekennzeichnet, dass** sie eine Vorrichtung (122) zur Regelung der Winkelposition der Zwischenstruktur (20) in Bezug auf den Turm (16) in der Haltekonfiguration aufweist.

13. Vorrichtung (10; 210; 310) gemäß einem der Ansprüche 7 bis 12, **dadurch gekennzeichnet, dass** in einer ersten von der Konfiguration, die geübt ist, und der Haltekonfiguration die Enden (152, 154) des Bereichs flexiblen Schlauchs (150) während einer Drehung des Frachtkahns (18) um den Turm (16) eines gegenüber dem anderen um die Drehachse (A-A') herum bezüglich des Winkels beweglich sind, und dass in einer zweiten von der Konfiguration, die geübt ist, und der Haltekonfiguration die Enden (152, 154) des Bereichs flexiblen Schlauchs (150) während einer Drehung des Frachtkahns (18) um den Turm (16) eines gegenüber dem anderen um die Drehachse (A-A') herum bezüglich des Winkels etwa fest bleiben.

14. Vorrichtung (310) gemäß einem der Ansprüche 7 bis 13, **dadurch gekennzeichnet, dass** sie eine Zwischenstruktur (312) zum mindestens teilweisen Stützen eines Bereichs (150) flexiblen Schlauchs einer zusätzlichen Transportleitung (24) aufweist, wobei die zusätzliche Zwischenstruktur (312) zwischen dem Turm (16) und dem Frachtkahn (18) montiert ist, zwischen einer Konfiguration, die geübt ist in gemeinsamer Drehung mit dem Frachtkahn (18) um die Drehachse, und einer Haltekonfiguration in einer Drehung um die Drehachse (A-A') um den Turm (16), wobei die Zwischenstruktur (20) außerhalb des Turms (16) angeordnet ist und die zusätzliche Zwischenstruktur (312) im Turm (16) angeordnet ist.

15. Vorrichtung gemäß einem der Ansprüche 7 bis 14, **dadurch gekennzeichnet, dass** der Turm (16) einen oberen Körper (16") und einen unteren Körper (16') aufweist, wobei der obere Körper (16") und der untere Körper (16') auf lösbare Art einer auf dem anderen montiert sind, wobei der untere Abschnitt (140) einen ersten Teil (140') und einen zweiten Teil (140") aufweist, welche mittels eines Trennteils (610) verbunden sind.

16. Vorrichtung gemäß Anspruch 15, **dadurch gekennzeichnet, dass** der untere Körper (16') des Turms Verankerungsmittel (32) des Frachtkahns (18) trägt.

## Claims

1. A method for disconnecting a device (10; 210; 310) for transferring fluid between the bottom of an expanse of water (12) and the surface (14), the transfer device (10; 210; 310) including:
- at least one fluid transport pipe (24) including a lower section (140), an intermediate section (142), an upper section (144), and a quick disconnect member (164) inserted between the intermediate section (142) and either the lower section (140) or the upper section (144);
- a superstructure (16) supporting the lower section (140), the superstructure (16) comprising a means (32) for anchoring in the bottom of the expanse of water (12);
- a floating barge (18) rotatably mounted on the superstructure (16) around an axis (A-A') of rotation, the barge (18) supporting the upper section (144),
the intermediate section (142) comprising at least one flexible hose section (150) wound around the axis of rotation (A-A'),
the method including a connecting step in which the intermediate section (142) is connected to either the lower section (140) or the upper section (144) via the quick disconnect member (164), and a disconnection step including the disconnection of the quick disconnect member (164),
**characterized in that** the transfer device (10; 210; 310) comprises at least one intermediate structure (20) for at least partial support of the wound flexible hose section (150), the intermediate structure (20) being mounted between the superstructure (16) and the barge (18), between a configuration driven in joint rotation with the barge (18) around the axis of rotation relative to the superstructure (16) and a configuration retained in rotation around the axis of the rotation (A-A') by the superstructure (16),
and **in that**, during the connection step, the intermediate structure (20) is placed in either the driven configuration or the retained configuration, the disconnection step comprising the passage of the intermediate structure (20) towards the other of the driven configuration and the retained configuration.

2. The method according to claim 1, **characterized in that** the intermediate structure (20) comprises a wall (102; 222) for supporting the wound hose section (150) extending around the axis of rotation, the connection step comprising the winding and/or unwinding of the wound hose section on the support wall (102; 222) around the axis of rotation (A-A') during the rotation of the barge (18) relative to the superstructure (16).

3. The method according to one of claims 1 or 2, **characterized in that** the disconnection step comprises the translation of the intermediate structure (20) along the axis of rotation (A-A') to make the intermediate structure (20) go from one of its driven configuration and its retained configuration towards the other of said driven configuration and retained configuration.

4. The method according to any one of the preceding claims, **characterized in that** during the connection step, the intermediate structure (20) is in its retained configuration.

5. The method according to any one of claims 1 to 3, **characterized in that** during the connection step, the intermediate structure (20) is in its driven configuration.

6. The method according to any one of the preceding claims, **characterized in that** after the disconnection step, the barge (18) is mounted freely rotating around the superstructure (16), the ends (152, 154) of the wound flexible hose section (150) remaining substantially angularly fixed relative to each other around the axis of rotation (A-A').

7. A device (10; 210; 310) for transferring fluid between the bottom of an expanse of water (12) and the surface of the type comprising:
- at least one fluid transport pipe (24) including a lower section (140), an intermediate section (142), an upper section (144), and a quick disconnect member (164) inserted between the intermediate section (142) and either the lower section (140) or the upper section (142),
- a superstructure (16) supporting the lower section (140), the superstructure (16) comprising a means (32) for anchoring in the bottom of the expanse of water (12);
- a floating barge (18), rotatably mounted on the superstructure (16) around an axis of rotation(A-A'), the barge (18) supporting the upper section (18),
the intermediate section (142) comprising at least one flexible hose section (150) wound around the axis of rotation (A-A'),
the transport pipe (24) being able to occupy a connected configuration in which the intermediate section (142) is connected to one of the lower section (140) and the upper section (144) via the quick disconnect member (164), and a disconnection configuration of the quick disconnect member (164),
**characterized in that** the transfer assembly (10; 210; 310) comprises an intermediate structure (20) at least partially supporting the wound flexible hose section (150), the intermediate structure (20) being mounted between the superstructure (16) and the barge (18), between a configuration driven in joint rotation with the barge (18) around the axis of rotation relative to the superstructure (16) and a configuration retained in rotation around the axis of rotation (A-A') by the superstructure (16).

8. The device (10; 210; 310) according to claim 7, **characterized in that** the intermediate structure (20) comprises a wall (102; 222) for supporting the wound flexible hose section (150) extending around the axis of rotation (A-A'), the wound hose section (15) being at least partially arranged on the support wall (102; 222).

9. The device (210; 310) according to claim 8, **characterized in that** it comprises a plurality of fluid transport pipes (24), the intermediate structure (20) comprising a wall (222) for supporting the wound flexible hose section (150) of each transport pipe (24), the support walls (222) being arranged one above the other along the axis of rotation (A-A').

10. The device (210; 310) according to any one of claims 7 to 9, **characterized in that** in the connected configuration of the pipe, the intermediate structure (20) occupies its driven configuration.

11. The device (10) according to any one of claims 7 to 9, **characterized in that** in the connected configuration of the pipe, the intermediate structure (20) occupies its retained configuration.

12. The assembly (10) according to claim 11, **characterized in that** it comprises a device (122) for adjusting the angular position of the intermediate structure (20) relative to the superstructure (18) in the retained configuration.

13. The device (10; 210; 310) according to any one of claims 7 to 12, **characterized in that** in a first of the driven configuration and the retained configuration, the ends (152, 154) of the wound flexible hose section (150) are angularly mobile relative to each other around the axis of rotation (A-A') when the barge (18) rotates around the superstructure (16), and **in that** in a second of the driven configuration and the retained configuration, the ends (152, 154) of the wound flexible hose section (150) remain substantially angularly fixed relative to each other around the axis of rotation (A-A') during rotation of the barge (18) around the superstructure (16).

14. The device (310) according to any one of claims 7 to 13, **characterized in that** it comprises an intermediate structure (312) for at least partially supporting a wound flexible hose section (150) of an additional transport pipe (24), the additional intermediate structure (312) being mounted between the superstructure (16) and the barge (18), between a configuration driven in joint rotation with the barge (18) around the axis of rotation and a configuration retained in rotation around the axis of rotation (A-A') by the superstructure (16), the intermediate structure (20) being arranged outside the superstructure (16), the additional intermediate structure (312) being arranged in the superstructure (16).

15. The device according to any one of claims 7 to 14, **characterized in that** the superstructure (16) comprises an upper body (16") and a lower body (16'), the upper body (16") and the lower body (16') being mounted one on the other so that they can be released, the lower section (140) comprising a first part (140') and a second part (140") connected by a disconnect member (610).

16. The device according to claim 15, **characterized in that** the lower superstructure body (16') supports the anchoring means (32) of the barge (18).
